# EUROPÄISCHE PATENTANMELDUNG

(11) **EP 1 400 641 A2**
(43) Veröffentlichungstag der Anmeldung: **24.03.2004**
(21) Anmeldenummer: 03017440.3
(22) Anmeldetag: 01.08.2003
(51) Int. Cl.: E04F 15/04, E04F 13/10, F16B 5/00, F16B 12/24

(54) **Paneele mit Verbindungsklammer**

(30) Priorität: 18.09.2002 DE 10243196
(71) Anmelder: M. Kaindl, 5071 Wals/Salzburg (AT)
(72) Erfinder: Knauseder, Franz, 5071 Wals (AT)
(74) Vertreter: Gille Hrabal Struck Neidlein Prop Roos

(57) **Zusammenfassung**

Die Erfindung betrifft ein Paneel mit Kupplungselementen, die derart ausgebildet sind, dass zwei Paneele gleichzeitig in einer ersten Richtung senkrecht zur gemeinsamen Fuge und einer zweiten Richtung parallel und senkrecht zur gemeinsamen Oberfläche der Paneele miteinander durch Formschluss verbunden werden können. Die Erfindung bezieht sich femer insbesondere auf einen Laminatfussboden. Das erfindungsgemäße Paneel weist ein Kupplungselement auf, welches derart ausgebildet ist, dass zwei Paneele in der Richtung entlang der gemeinsamen von den Paneelen gebildeten Fuge insbesondere durch Formschluss miteinander verbindbar sind. Die formschlüssige Verbindung entlang der gemeinsamen Fuge nach der Erfindung bewirkt daher mehr Sicherheit bei der Montage gegen ein Vergrößern der Ritze, sowie gegen Ungenauigkeiten beim verlegten Parkett, Verlegte Parkettelemente können bei stärkerer Beanspruchung nicht mehr gegeneinander verrutschen, wodurch Beschädigungen ausbleiben und Nacharbeiten nicht notwendig sind. Bevorzugt ist das Kupplungselement als separate Kunststoffklammer in H-Form ausgeführt.

## Beschreibung

Die Erfindung betrifft ein Paneel mit Kupplungselementen, die derart ausgebildet sind, dass zwei Paneele gleichzeitig in einer ersten Richtung senkrecht zur gemeinsamen Fuge und einer zweiten Richtung parallel und senkrecht zur gemeinsamen Oberfläche der Paneele miteinander durch Formschluss verbunden werden können, Auf den Einsatz von Leim kann dann verzichtet werden, wenn die Paneele erfindungsgemäß als Belag für einen Fußboden oder eine Wandverkleidung eingesetzt werden.

Ein Paneel der eingangs genannten Art ist zum Beispiel aus Druckschrift WO 00/20705 bekannt. Diese Paneele weisen an ihren Kanten Nuten zur Aufnahme eines separaten, symmetrisch ausgebildeten Federelements auf, wodurch die Paneele sowohl senkrecht zur gemeinsamen Oberfläche der Paneele aus auch senkrecht zur Fuge formschlüssig verriegelt werden können. Das Verriegeln erfolgt durch Einschnappen, so dass in Richtung senkrecht zur Oberfläche der Paneele entweder die Nut oder die Feder elastisch nachgeben müssen. Bei der Dimensionierung derartiger Einschnappverbindungen ist man daher gezwungen, einen gewissen Raum senkrecht zur Oberfläche bereitzustellen, der mechanisch und geometrisch den Anforderungen einer Schnappverbindung genügt. Darüber hinaus können derartig miteinander verbundene Paneele unbeabsichtigt entlang ihrer gemeinsamen Fügekante verschoben werden, was zu unbeabsichtigten Ungenauigkeiten beim Verlegen führt. Dadurch und durch unbeabsichtigtes Verschieben vergrößern außerdem Ritzen, die sich an der Fügestelle bilden. In diesen kann sich Schmutz sammeln oder Wasser eindringen, wodurch der Kern des Paneels aufquellen kann. Dadurch hebt sich die Oberfläche im Bereich der Ritze und wird stärker beansprucht, wodurch die Lebensdauer des Paneels als Ganzes sinkt.

Ferner sind Paneele mit einer kraft- oder formschlüssig verbundenen Nut-Federverbindung bekannt, Um ein Verschieben der Paneele entlang der gemeinsamen Fuge zu verhindern, kann beispielsweise die Pressung besonders groß gewählt werden. Dadurch steigt die Belastung des Materials im Bereich der Nut und Feder wodurch die Paneeloberfläche in diesem Bereich einem stärkeren Verschleiß unterliegt. Wenn die Nut und Feder darüber hinaus aus dem gleichen Material wie das Paneel gefertigt sind, beispielsweise durch Herausfräsen aus dem Kern, muss das gesamte Paneel aus einem Material gefertigt sein, welches die für die sichere Verbindung notwendigen Festigkeitsund Elastizitätseigenschaften aufweist. Für den Fußboden selber wäre ein preiswerteres Material jedoch ausreichend.

Die bekannten Paneele nach dem Stand der Technik zielen darauf ab, dass einmal miteinander verbundene, insbesondere leimlos miteinander verbundene, Paneele im verlegten Zustand auch bei größerer Krafteinwirkung nicht versehentlich voneinander lösbar sind.

Das Material, aus dem die Paneele der eingangs genannten Art bestehen können, ist im Prinzip frei wählbar. Erfindungsgemäß sind jedoch insbesondere Paneele betroffen, die ganz oder überwiegend aus einem Holzwerkstoff bestehen, Bei einem Parkettpaneel kann dieses vollständig aus Holz gefertigt sein, Alternativ kann ein Parkettpaneel eine Trägerplatte umfassen, die beispielsweise aus HDF oder MDF besteht. Oberhalb der Trägerplatte sind eine oder mehrere Parkettlamellen aufgebracht. Unterhalb der Trägerplatte kann eine Schicht oder ein Papier aufgebracht sein, um einen Gegenzug zu bewirken, um Verformungen zu vermeiden. Es sind ferner leimlos miteinander verbindbare Paneele bekannt, die ganz oder überwiegend aus Kunststoff bestehen, so zum Beispiel aus Druckschrift US 4,426,820.

Die Erfindung bezieht sich ferner insbesondere auf einen Laminatfussboden. Dieser umfasst eine Trägerplatte aus einem Holzwerkstoff. Als Holzwerkstoff werden derzeit MDF und HDF bevorzugt. Ein weiterer typischer Holzwerkstoff besteht aus verleimten Spänen. Oberhalb der Trägerplatte ist eine Dekorschicht aufgebracht, die ein Dekorpapier nebst einer Schutzschicht umfasst. Unterhalb der Trägerplatte ist ein Gegenzugpapier aufgebracht, um die vorgenannten Verformungen-zu vermeiden, Technische Laminate, sowie daraus hergestellte Paneele, gewinnen zunehmend an Bedeutung. Diese werden insbesondere als Fußbodenbelag eingesetzt.

Paneele der erfindungsgemäßen Art können einen oder mehrere der vorgenannten Merkmale umfassen. Es ist daher Aufgabe der Erfindung, Paneele der eingangs genannten Art bereitzustellen, bei dem zuvor genannte Nachteile vermieden werden. Insbesondere soll mehr Sicherheit während des Verlegens, sowie im verlegten Zustand des Parketts gegen unbeabsichtigtes Lösen einzelner Paneelelemente, sowie eine längere Lebensdauer der Paneele erreicht werden.

Die Aufgabe der Erfindung wird durch ein Paneel mit den Merkmalen des ersten Anspruch gelöst. Vorteilhafte Ausgestaltungen ergeben sich aus den Unteransprüchen.

Das erfindungsgemäße Paneel der eingangs genannten Art weist ein Kupplungselement auf, welches derart ausgebildet ist, dass zwei Paneele in der Richtung entlang der gemeinsamen von den Paneelen gebildeten Fuge insbesondere durch Formschluss miteinander verbindbar sind, Darunter wird verstanden, dass die Paneele in der Richtung entlang der gemeinsamen Fuge gegen unbeabsichtigtes Verschieben oder Trennen gesichert, d. h. fixiert sind. Bekannte Paneele sind üblicherweise entlang der gemeinsamen Fuge verschiebbar bzw, deren Verschiebbarkeit wird lediglich erschwert durch die Verbindung, die eine Bewegung senkrecht zur gemeinsamen Fuge oder in der Richtung parallel und senkrecht zur gemeinsamen Oberfläche der Paneele verhindern soll. Beim Stand der Technik ist also das Hemmen der Verschiebbarkeit lediglich ein Begleiteffekt einer in einer anderen Richtung wirkenden Verbindung. Die formschlüssige Verbindung entlang der gemeinsamen Fuge nach der Erfindung bewirkt daher mehr Sicherheit bei der Montage gegen ein Vergrößern der Ritze, sowie gegen Ungenauigkeiten beim verlegten Parkett, Verlegte Parkettelemente können bei stärkerer Beanspruchung nicht mehr gegeneinander verrutschen, wodurch Beschädigungen ausbleiben und Nacharbeiten nicht notwendig sind.

Aus Sicht des Recyclings ist es bevorzugt, die Kupplungselemente ebenso wie die Paneele aus einem Holzwerkstoff zu fertigen, was auch einstückig durchgeführt werden kann.

Wenn ein Kupplungselement, insbesondere das, welches die Verbindung der Paneele in Richtung entlang der gemeinsamen Fuge bewirkt, als separates Kupplungselement aus einem anderen Material als die Paneele vorliegt, können alle Eigenschaften der Verbindung unabhängig vom Paneel gesteuert werden. Beispielsweise kann durch Auswahl des Materials und der Geometrie des separaten Kupplungselements die Elastizität und Festigkeit unabhängig vom Paneel eingestellt werden, was eine optimale Verbindung ermöglicht. Kunststoffe sind besonders geeignet, da sie preiswert, leicht bearbeitbar und sehr variabel konfektionierbar sind.

Die waagerechten bzw. senkrechten Kontaktflächen an den Rändern der Paneele, an denen die Kupplungselemente vorgesehen sind, bewirken eine Sicherung der Paneele gegen Verschieben in senkrechter Richtung bzw. waagerechter Richtung. Bevorzugt sind hierbei insbesondere auf dem Gebiet der Paneele hinreichend bekannte Nut-/Federverbindungen ohne Hinterschneidungen, d.h. solche, die keine Einschnappverbindung darstellen und daher ohne elastische Verformung ihrer Elemente eine Verbindung ermöglichen. Ferner sind solche Nut-/Federverbindungen bevorzugt, bei denen durch eine Verjüngung der Nut und/oder Feder das Einführen erleichtert wird und die Passgenauigkeit erhöht wird, auch mittels Presspassung.

Es ist bevorzugt, dass das Kupplungselement, welches die Verbindung entlang der gemeinsamen Fuge bewirkt, in einer Ausnehmung im Paneel durch Formschluss gehalten wird. Der Formschluss kann dabei sowohl in Richtung entlang der gemeinsamen Fuge, als auch senkrecht zur gemeinsamen Fuge wirken. Dadurch werden die Paneele sowohl zusammengedrückt, als auch am Verschieben entlang der Fuge gehindert, so dass das Kupplungselement ein Doppelfunktion erfüllt. Dieses Kupplungselement wird nachfolgend auch als zweites oder separates Kupplungselement bezeichnet.

Es ist weiterhin bevorzugt, dass das zweite Kupplungselement nach Art der Einschnappverbindung in die Ausnehmung des Paneels eingesetzt ist. Unter Einschnappverbindung wird insbesondere eine solche verstanden, bei der das Kupplungselement unter Zusammendrücken seiner äußeren, hakenartigen Begrenzung in eine Öffnung eingeführt wird und anschließend hinter Hinterschneidung in der Ausnehmung greift, wodurch eine Verbindung bewirkt wird. Die Hinterschneidungen in der Ausnehmung sind so gestaltet, dass ein einmal eingeführtes Kupplungselement nicht aus der Ausnehmung herausgezogen werden kann ohne es mit anderen Mitteln wieder zusammenzudrücken. Dabei ist bevorzugt, dass in der Ausnehmung eine weitere Wand vorgesehen ist, die eine Bewegung des eingeführten Kupplungselements in der entgegengesetzten Richtung begrenzt. Im Idealfall ist dadurch das eingesetzte Verbindungselement vollständig in einer Richtung senkrecht zur gemeinsamen Fuge fixiert.

In einer weiteren vorteilhaften Ausgestaltung sind die Flächen des zweiten Verbindungselements, die hinter die Hinterschneidungen der Ausnehmung greifen, und /oder die Hinterschneidungen derart angeschrägt, dass ein teilweise eingesetztes Verbindungselement durch die Rückstellkräfte des zusammengedrückten Schenkels sich tiefer in die Ausnehmung hereinzieht und damit die Paneele zusammendrückt. Optimal ist es, wenn sich das Element soweit in die Ausnehmung hereinzieht, dass seine Stirnseite gegen die sich der Hinterschneidung entgegengesetzt erstreckende Rückwand drückt. Dadurch lässt sich das Kupplungselement nicht mehr bewegen, was eine Ausweichbewegung des Kupplungselements beim Verbinden unmöglich macht. Die Anschrägung hat ferner den Vorteil, das Paneele, Ausnehmungen und Kupplungselement weniger maßgenau gefertigt sein müssen. Spiel zwischen Bauteilen wird durch das Hereinziehen der Elemente in die Ausnehmung ausgeglichen und ein Einschnappen ist auch bei weniger maßhaltigen Teilen sichergestellt.

Vorteilhaft ist es, wenn das zweite Kupplungselement, wenn es in die Ausnehmung eingesetzt ist, in dem Bereich der gemeinsamen Kontaktfläche der Paneele nicht zusammendrückbar ist. Dies verhindert eine Bewegung der Paneele entlang der gemeinsamen Fuge, da in diesem Bereich das zweite Kupplungselement starr ist.

Besonders einfach herzustellen ist das zweite Kupplungselement, wenn es zwei im wesentlichen parallel zueinander erstreckende Schenkel aufweist, deren freie Enden elastisch aufeinander zu bewegbar sind. Der Raum zwischen den Schenkeln wird also als Bewegungsraum genutzt. Durch die Länge und Dicke der Schenkel kann die Elastizität ebenfalls beeinflusst werden. Besonders bevorzugt ist es, das zweite Kupplungselement in Gestalt eines "H" auszuarbeiten, da so besonders einfach die beiden Schenkel, in doppelter, d, h in entgegengesetzter Richtung wirkender Form, realisierbar sind. Symmetrie erleichtert die Herstellung und den Zusammenbau, da nichts vertauscht werden kann. Der waagerechte Steg des "H" bildet dabei gleichzeitig den Befestigungspunkt für die Schenkel und die notwendigerweise starre Stelle, an der das zweite Kupplungselement nicht zusammendrückbar ist,

Die Montage der Kupplungselemente, bzw. deren werkseitige einseitige Verbindung mit Paneelen erleichtert sich, wenn die freien Enden der Schenkel eine Verjüngung zum Einführen in die Ausnehmung der Paneele aufweist. Die Verjüngung ermöglicht sowohl das Zentrieren, als auch das Zusammendrücken der Schenkel bis die Einschnappverbindung hergestellt ist, Das Zusammendrücken bedarf daher keines zusätzlichen Aufwands.

In einer weiteren Ausgestaltung ist vorgesehen, dass das zweite Kupplungselement ausschließlich in einer Richtung parallel zur Oberfläche der Paneele in die Ausnehmung einführbar ist. Dadurch wird verhindert, dass das zweite Verbindungselement zwischen einem Untergrund und dem Paneel liegt, wie in der Druckschrift WO 93/13280 beschrieben. Diese Verbindungsklips bedingen einen Abstand zwischen Platte und Untergrund, was unerwünschte Resonanzgeräusche verursacht.

Eine weitere Ausgestaltung sieht vor, dass die Ausnehmung derart gestaltet ist, dass sie einschließlich Hinterschneidungen durch Fräsen mit einem Dreiachs-Stufenfräser herstellbar ist. Durch den Stufenfräser kann nämlich von der Fuge her kommend eine Ausnehmung gefräst werden, die das zweite Kupplungselement gleichzeitig von der Ober- und Unterseite, sowie den Seitenwänden, her hält. Die Fertigung kann daher preiswert in einem einzigen Arbeitsgang folgen. Zunächst wird von der Fuge her kommend parallel zur Oberfläche des Paneels gefräst. Anschließend wird der Fräser rechtwinklig dazu und weiterhin parallel zur Oberfläche hin und her bewegt, wobei sich eine T-förmige Vertiefung parallel zur Unterseite des Paneels bildet. Diese Vertiefung wird nach oben beidseitig durch Stege, die der obere Teil des Stufenfräsers wegen seines kleineren Durchmessers stehengelassen hat, begrenzt, was dem zweiten Verbindungselement zusätzlichen senkrechten Halt gibt. Danach wird der Fräser senkrecht zur Unterseite des Paneels und von dieser weg geführt. Dabei werden gleichzeitig die oberen Stege durch den unteren Teil des Stufenfräsers teilweise entfernt. Der Fräsvorgang ist damit beendet. Durch diese Bewegungen werden gleichzeitig die Hinterschneidungen für die Fläche des zweiten Kupplungselements, die Rückwand, die oberen Stege und die untere Fläche der Ausnehmung gebildet.

Es ist ferner bevorzugt, die Erfindung bei bekannten aus Holz oder Holzwerkstoffen gebildeten Paneelen einzusetzen. Diese besonders bewährten und preiswert herzustellenden Werkstoffe sind beispielsweise HDF oder MDF, weisen auf der Oberseite ein Dekorpapier oder ein Dekor auf, oder eine Trägerplatte, die aus mehreren miteinander verpressten Papieren besteht, die insbesondere mit Aminoharz versehen sind. Die Erfindung ist besonders geeignet für Beläge und Fußbodenbeläge, die aus erfindungsgemäßen Paneelen gebildet werden. Für den Monteur oder Verbraucher gut zu handhabende Abmessungen sind dabei eine Dicke von 6 bis 15 mm, eine Länge von 100 bis 2000 mm und eine Breite von 100 bis 2000 mm. Das zweite separate Verbindungselement hat vorteilhafterweise die bei gattungsgemäßen Paneelen üblichen Abmessungen, insbesondere solche, die bei derartigen Fußbödenbelägen üblich sind. Der Fachmann wählt dabei die wesentlichen Parameter, wie z.B. die Länge des Schenkels, die Zusammendrückbarkeit der Schenkel, die Dicke des Elements und den Werkstoff so, dass die beschriebene Funktion bewirkt werden kann. Das Gleiche gilt für die Ausbildung der Nuten und Federn.

Die Erfindung ist bei allen bekannten Arten von Paneelverbindungen einsetzbar,

Im folgenden wird die Erfindung anhand von Zeichnungen erläutert und zwar zeigt
- Fig. 1: Paneele mit nicht montiertem Verbindungselement in perspektivischer Ansicht;
- Fig. 2: nicht miteinander verbundene Paneele mit montiertem Verbindungselement in perspektivischer Ansicht;
- Fig. 3: die Paneele aus Fig. 2 in der Aufsicht;
- Fig. 4: die Ausnehmung in einem Paneel im Querschnitt mit eingesetztem Verbindungselement und
- Fig. 5: eine Prinzipskizze miteinander verbundener Paneele.

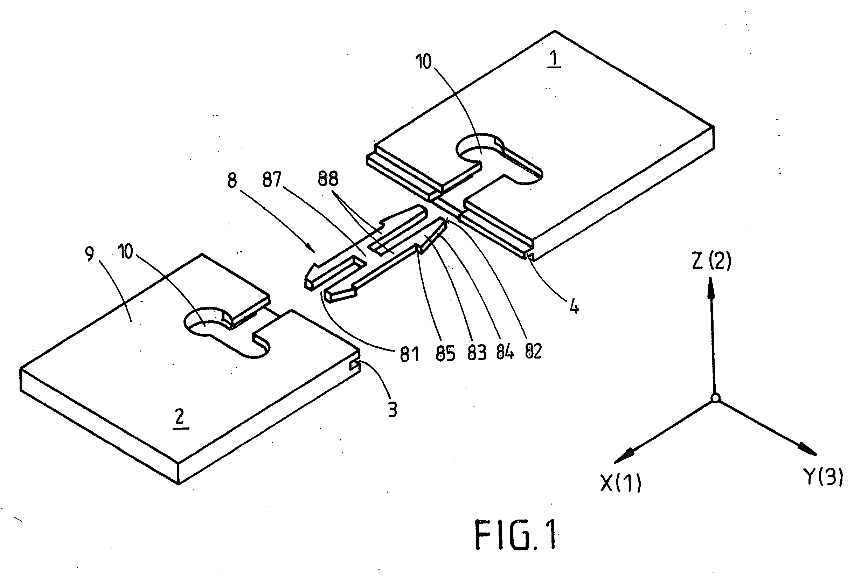

Fig. 1 zeigt zwei Paneele 1, 2, die mittels Kupplungselementen 3, 4, 8 miteinander verbunden werden sollen, Dabei wird exemplarisch die Verbindung entlang der Fuge 5 näher erläutert. Die übrigen Kanten der Paneele können dabei beliebig gestaltet sein. Als Kupplungselemente dienen im Beispiel zum einen die Nut-/Federverbindung 3, 4 und die Verbindungsklammer 8. Ohne Zuhilfenahme weiterer Verbindungselemente würde eine Nut-/Federverbindung lediglich die beiden Paneele 1, 2 in Richtung der Z-Achse, d.h. senkrecht zur Oberfläche der Paneele fixieren, Ein Verschieben bzw. Auseinanderziehen der Paneele wäre jedoch im Y bzw, X-Richtung möglich, Eine Verriegelung in die beiden letztgenannten Richtungen wird erfindungsgemäß ermöglicht durch ein - in diesem Beispiel separates - Kupplungselement in Gestalt einer Verbindungsklammer 8. Ausgehend von einem mittleren Steg 87 verlaufen in entgegengesetzte Richtung jeweils zwei parallel zueinander verlaufende Schenkel 88, die im Bereich des Vorderendes 81 bzw. Hinterendes 82 mit Haken 83 versehen sind.

Die Haken dienen dazu, die Verbindungsklammer 8 im Inneren einer in den Paneelen vorgesehenen Ausnehmung 10 festzuhalten, d.h. daran zu hindern in Richtung der X-Achse herausgezogen zu werden. Die Darstellung in Fig. 1 erläutert also die Verbindung von Paneelen, bei denen die als zweites Kupplungselement dienende Verbindungsklammer zunächst in keinem der Paneele befestigt ist. Dadurch reduzieren sich die Abmessungen der Paneele, weshalb die Verpackung kleiner ausfallen kann, da die Klammer 8 nicht über die Seitenwand heraussteht. Ein Abbrechen der relativ empfindlichen Verbindungsklammer beim Transport und Handhabung wird dadurch vermieden.

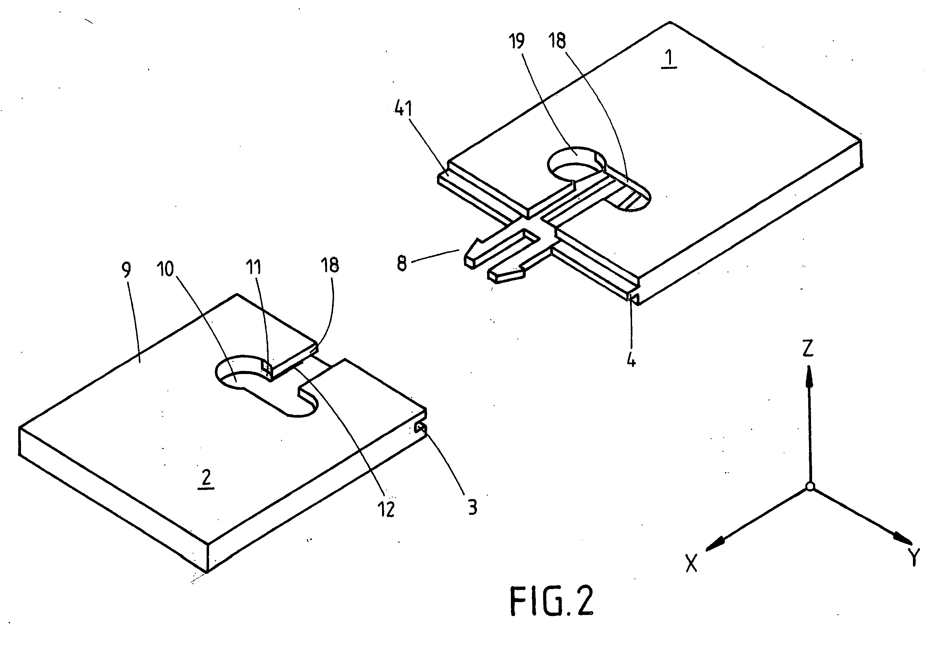

Fig. 2 zeigt die Paneele aus Fig. 1, wobei die Verbindungsklammer bereits vormontiert ist. Dies kann werkseitig geschehen, In diesem Fall ist es - anders als dargestellt - nicht zwingend notwendig, dass die Verbindungsklammer auf beiden Seiten mit Haken zum Einschnappen versehen ist. Sie kann auf jede andere Weise fest mit dem Paneel 2 verbunden sein, beispielsweise durch eine Presspassung oder durch Verkleben. Sie kann ferner aus dem Paneel herausgefräst worden sein. Vorteilhafterweise werden die Klammern mittels eines Beschlagautomaten angebracht, wobei ggf. die Klammern nach unten entsprechend geformt sind.

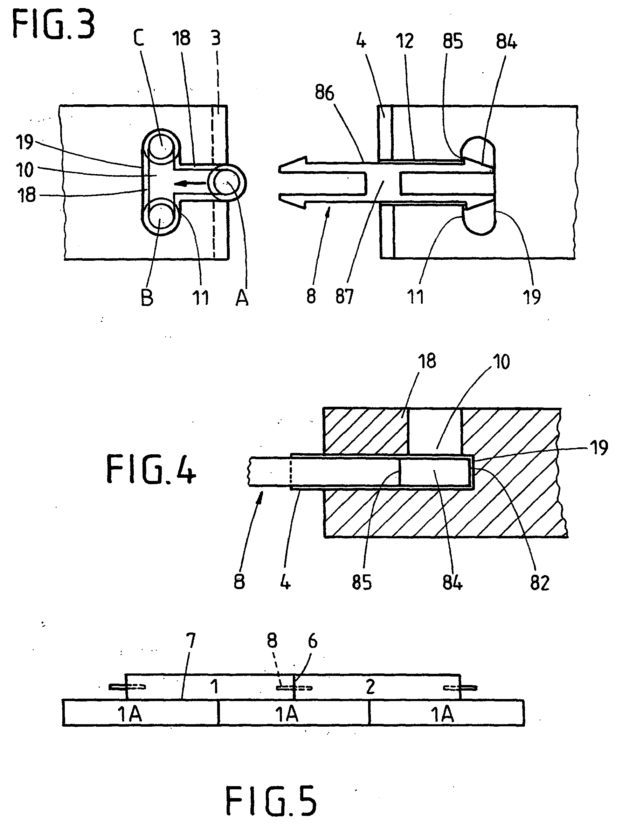

Fig. 3 erläutert die Befestigung der Klammer 8 in der Ausnehmung 10 der Paneele. Dargestellt sind, wie auch in Fig. 1 und 2, die Unterseite 9 der Paneele. Es ist bevorzugt, die Ausnehmungen in die Unterseite zu fräsen, da so die sichtbare Oberfläche nicht beeinträchtigt wird. Die Buchstaben A, B und C des rechten Paneels erläutern die Herstellung einer erfindungsgemäß geeigneten Ausnehmung 10. Ein Stufenfräser (angedeutet durch zwei koaxiale Kreise) dringt von der Position A her kommend in die Stirnfläche des Paneels ein. Aufgrund der Kontur des Stufenfräsers verbleibt im Bereich der Oberfläche der Unterseite 9 des Paneels ein Steg 18, der die eingesetzte Klammer in Richtung Z-Achse gegen Herausfallen sichert. In einem weiteren Schritt wird der Fräser in Richtung Y-Achse (in Fig. 3 nach unten), d.h. 90° zu seinem bisherigen Weg, bewegt. Dabei bildet er die erste Hinterschneidung 11, die zum Befestigen der Fläche 85 der Klammer dient, aus. Auch bei diesem Schritt verbleibt ein Steg 18, der die Ausnehmung 10 nach oben verengt, In einem weiteren Schritt wird der Stufenfräser, ohne die Höhe zu verändern, in Gegenrichtung bis zur Position C verfahren. Dadurch bildet sich die zweite Hinterschneidung 11 aus. Die beiden letzten Bewegungen bilden auch die Rückwand 19, die der Hinterschneidung 11 gegenübersteht, aus, In einem letzten Schritt wird der Fräser aus der Blattebene heraus in Z-Richtung verfahren, wodurch der Teil des Steges 18 oberhalb des Stufenfräsers herausgefräst wird, Die Geometrie der Ausnehmung 10 ist somit mit einem Stufenfräser in einem Arbeitsgang herstellbar. Vorteilhaft ist dabei, dass durch das Verfahren des Fräsers in die Positionen B und C ein Zugang für Finger und dergleichen geschaffen wird, was ein Zusammendrücken der Schenkel 88 der Klammer ermöglicht zwecks Lösen der Verbindung, Um eine optimale, biegemomentfreie Verbindung der Paneele zu ermöglichen, ist die Klammer 8 in der Ebene der Feder 4 in der Ausnehmung 10 gehalten, wie Fig. 3 in Verbindung mit Fig. 4 zeigt. Die eingesetzte Klammer berührt mit ihrem hinteren Ende 82 die Stirnseitenferne Endwand 19 der Ausnehmung, was ein Gegenhalten beim Zusammenfügen zweier Paneele ermöglicht. Die Verjüngung 84 ermöglicht ein elastisches Zusammendrücken der Schenkelspitzen beim Einführen der Klammer 8 in die Ausnehmung 10. Die hakenartigen Flächen 85 am hinteren Ende der Schenkel greifen hinter die Hinterschneidung 11 der Ausnehmung und verriegeln somit die Klammer gegen Herausziehen aus der Ausnehmung. Der Steg 87, der die vier Schenkel trägt, ist wiederum so angeordnet, dass in diesem Bereich ein Zusammendrücken der Klammer 8 nicht möglich ist, Dies gewährleistet, dass die Paneele in Y-Richtung nicht gegeneinander verschiebbar sind, da die Klammer in diesem Bereich nicht nachgeben kann.

Fig. 4 erläutert, dass die Klammer 8 in der Ebene der Feder 4 eingelassen ist. Es handelt sich dabei um eine bevorzugte Ausgestaltung. Es sind jedoch auch andere Geometrien denkbar. Es kommt darauf an, dass die eingesetzte Klammer 8 eine derartige Kraftwirkung ausübt, dass sich keine Ritze zwischen den von der Klammer zusammengehaltenen Paneelen ergibt, insbesondere im Bereich der sichtbaren Oberund Lauffläche.

Fig. 5 zeigt schließlich eine Anordnung von erfindungsgemäßen Paneelen mit Längsseiten 7 und Stirnseiten 6. Längsseiten sind alle diejenigen Kanten, die länger als die Stirnseiten sind. Bekannte Fußbodenpaneele weisen typischerweise Längsseiten von ca. 1,60 m und Stirnseiten von ca. 25 cm auf. Es ist bevorzugt, die kürzeren Stirnseiten 6 erfindungsgemäß zu verbinden. Die Verbindung der Längsseiten 7 ist dabei beliebig. Die Längsseiten der Paneele 1A und 1 können beispielsweise durch eine einschnappende Nut-/Federverbindung verbunden werden, wobei die beiden Seiten durch Verschieben in der gleichen Ebene aufeinander zu verbunden werden können. Danach wird auf gleiche Weise Paneel 1A und 2 miteinander verbunden, wobei die Stirnseiten 6 der Paneele 1 und 2 sich nicht berühren sondern einen Abstand aufweisen, der eine Handhabung der erfindungsgemäßen Klammer 8 (in Fig. 5 nur angedeutet) ermöglicht. Nachdem die Paneele 1 und 2 mit dem Paneel 1A verbunden sind, werden die Paneele 1 und / oder 2 entlang der Längskante des Paneels 1A aufeinander zu bewegt, bis die erfindungsgemäße Verbindung durchgeführt wurde. Dabei sind angeschrägte Flächen 85 an den Klammern 8 zweckmäßig, da sie eine spielfreie Verbindung ermöglichen, indem sie, bei geeigneter Auslegung von Rückstellkraft und Neigungswinkel der Fläche 85 und der Gegenfläche 11, die beiden Paneele 1 und 2 aufeinander zuziehen. Es ist ferner denkbar, dass zunächst die Paneele 1 und 2 erfindungsgemäß miteinander verbunden werden, und dann gemeinsam durch horizontales Verschieben auf das bereits verlegte Paneel 1A zu, so miteinander verbunden werden, wie aus dem Stand der Technik bekannt. Im Stand der Technik ist es auch bekannt, Paneele an den Längsseiten nicht durch horizontales Aufeinanderzubewegen, sondern durch eine Drehbewegung um die Längskante herum in Verbindung zu bringen. Auch derartige Längsseitenverbindungen sind erfindungsgemäß umfasst.

## Patentansprüche

1. Paneele mit Kupplungselementen, die derart ausgebildet sind, dass zwei Paneele (1, 2) gleichzeitig in einer ersten Richtung (X) senkrecht zur gemeinsamen Fuge (5) und in einer zweiten Richtung (Z) parallel und senkrecht zur gemeinsamen Oberfläche der Paneele miteinander durch Formschluss verbindbar sind,
**dadurch gekennzeichnet, dass**
die Kupplungselemente (3,4,8,10) derart ausgebildet sind, dass die zwei Paneele in einer dritten Richtung (Y) entlang der gemeinsamen Fuge (5) miteinander durch Formschluss verbindbar sind.

2. Paneele nach Anspruch 1, **dadurch gekennzeichnet, dass** die Paneele (1, 2) insbesondere einschließlich einiger oder aller Kupplungselemente ganz oder überwiegend aus Holz und/ oder aus einem Holzwerkstoff bestehen,

3. Paneele nach Anspruch 1 oder 2, **dadurch gekennzeichnet, dass** zumindest ein separates Kupplungselement (8) vorgesehen ist, das von den Paneelen getrennt oder aus einem anderen Material als die Paneele hergestellt ist.

4. Paneele nach einem der vorherigen Ansprüche, **dadurch gekennzeichnet, dass** waagerechte Kontaktflächen (41) an den Kupplungselementen vorgesehen sind, die das Verbinden in der zweiten Richtung (Z) bewirken.

5. Paneele nach einem der vorherigen Ansprüche, **dadurch gekennzeichnet, dass** senkrechte Kontaktflächen (41, 11, 85) an den Kupplungselementen vorgesehen sind, die das Verbinden in der ersten Richtung (X) bewirken.

6. Paneele nach einem der vorherigen Ansprüche, **dadurch gekennzeichnet, dass** senkrechte Kontaktflächen (86, 12) an den Kupplungselementen vorgesehen sind, die das Verbinden in der dritten Richtung (Y) bewirken.

7. Paneele nach einem der vorherigen Ansprüche, **dadurch gekennzeichnet, dass** Kontaktflächen (41) als Nut-Feder-Verbindung ausgestaltet sind.

8. , Paneele nach einem der vorherigen Ansprüche, **dadurch gekennzeichnet, dass** in Kontaktflächen (41) Ausnehmungen (10) vorgesehen sind, in denen das separate Kupplungselement gehalten ist.

9. , Paneele nach einem der vorherigen Ansprüche, **dadurch gekennzeichnet, dass** das separates Kupplungselement in der Ausnehmung insbesondere durch Presspassung gehalten ist.

10. Paneele nach einem der vorherigen Ansprüche, **dadurch gekennzeichnet, dass** das separates Kupplungselement in der Ausnehmung insbesondere durch Formschluss gehalten ist.

11. Paneele nach einem der vorherigen Ansprüche, **dadurch gekennzeichnet, dass** die Paneele (1, 2) mittels eines ersten Kupplungselements (3,4) in der zweiten Richtung (Z) verbunden sind und über ein zweites Kupplungselement (8) in der ersten und dritten Richtung (X, Y) verbunden sind.

12. Paneele nach einem der vorherigen Ansprüche, **dadurch gekennzeichnet, dass** das zweite Kupplungselement ein separates Kupplungselement (8) ist,

13. Paneele nach einem der vorherigen Ansprüche, **dadurch gekennzeichnet, dass** das zweite Kupplungselement aus einem Material besteht, welches im Vergleich zu dem Material aus dem die Paneele bestehen, eine größere Rückstellkraft aufweist.

14. Paneele nach einem der vorherigen Ansprüche, **dadurch gekennzeichnet, dass** das zweite Kupplungselement derart ist, dass es in der dritten Richtung (Y) entgegen seiner Rückstellkraft zusammendruckbar ist.

15. Paneele nach einem der vorherigen Ansprüche, **dadurch gekennzeichnet, dass** das zweite Kupplungselement in die Ausnehmung einführbar ist, wenn es zusammengedrückt ist und aus der Ausnehmung nicht herausnehmbar ist, wenn es nicht zusammengedrückt ist.

16. Paneele nach einem der vorherigen Ansprüche, **dadurch gekennzeichnet, dass** die Ausnehmungen (10) Hinterschneidungen (11) aufweisen, hinter denen Flächen (85) des in die Ausnehmung eingesetzten zweiten Kupplungselements verriegeln können, derart, dass das zweite Kupplungselement in der ersten Richtung (X) gegen Herausziehen aus der Ausnehmung verriegelt ist.

17. die Flächen (85) und die Hinterschneidungen (11) derart angeschrägt sind, dass im Eingriff befindliche Flächen und Hinterschneidungen bewirken, dass das zweite Kupplungselement in die Ausnehmung hereingezogen wird.

18. Paneele nach einem der vorherigen Ansprüche, **dadurch gekennzeichnet, dass** die Ausnehmung (10) eine sich in der zweiten Richtung (Z) erstreckende und den Hinterschneidungen der Ausnehmung gegenüberstehende Wand (19), aufweist, derart dass das zweite eingesetzte Verbindungselement in der ersten Richtung (X) gegen Hereindrücken und Herausziehen verriegelt ist.

19. Paneele nach einem der vorherigen Ansprüche, **dadurch gekennzeichnet, dass** das zweite Kupplungselement derart ist, dass es wenn es in die Ausnehmung eingesetzt ist im Bereich der gemeinsamen Kontaktfläche (41) der Paneele nicht zusammendrückbar ist,

20. Paneele nach einem der vorherigen Ansprüche, **dadurch gekennzeichnet, dass** das zweite Kupplungselement als "H" ausgestaltet ist.

21. Paneele nach einem der vorherigen Ansprüche, **dadurch gekennzeichnet, dass** das zweite Kupplungselement zwei im wesentlichen parallel zueinander sich erstreckende Schenkel (88) aufweist, deren freie Enden elastisch aufeinander zu bewegbar sind.

22. Paneele nach einem der vorherigen Ansprüche, **dadurch gekennzeichnet, dass** das zweite Kupplungselement und die Ausnehmung derart sind, dass das zweite Kupplungselement ausschließlich in einer Richtung parallel zur Oberfläche der Paneele in die Ausnehmung einführbar ist.

23. Paneele nach einem der vorherigen Ansprüche, **dadurch gekennzeichnet, dass** die Flächen (85) zum Hintergreifen der Hinterschneidungen (11) der Ausnehmung (10) an den freien Enden (81, 82) der Schenkel vorgesehen sind.

24. Paneele nach einem der vorherigen Ansprüche, **dadurch gekennzeichnet, dass** die freien Enden der Schenkel eine Verjüngung (84) aufweisen , derart, dass diese beim Einführen des zweiten Kupplungselements in die Ausnehmung (10) entgegen ihrer Rückstellkraft zeitweise zusammengedrückt werden,

25. Paneele nach einem der vorherigen Ansprüche, **dadurch gekennzeichnet, dass** die Ausnehmung derart ausgestaltet ist, dass sie durch Fräsen mit einem Stufenfräser, insbesondere einem solchen, der in der ersten, zweiten und dritten Richtung (X,Y,Z) verfahrbar ist.

26. Paneele nach einem der vorherigen Ansprüche, **dadurch gekennzeichnet, dass** wenigstens ein Paneel (1, 2) eine aus einem Holzwerkstoff, insbesondere eine aus HDF oder MDF bestehende Trägerplatte aufweist.

27. Paneele nach einem der vorherigen Ansprüche, **dadurch gekennzeichnet, dass** an der Oberseite ein Dekorpapier oder ein Dekor vorgesehen ist,

28. Paneele nach einem der vorherigen Ansprüche, **dadurch gekennzeichnet, dass** wenigstens ein Paneel (1, 2) eine Trägerplatte aufweist, die aus mehreren miteinander verpressten Papieren besteht, die insbesondere mit aminoplastischen, wärmehärtbaren Harzen versehen sind.

29. Paneele mit Kupplungselementen nach einem der vorhergehenden Ansprüche, **dadurch gekennzeichnet, dass** diese an einer oder beiden Schmalseiten (6)-eines Paneels vorgesehen sind und weitere Kupplungselemente, vorzugsweise an den Längsseiten (7) der Paneele (1, 2), derart vorgesehen sind, dass diese an der Langseite ausschließlich durch eine Drehbewegung um ihre gemeinsame Verbindungsfuge verbunden werden können.

30. Paneele nach einem der vorhergehenden Ansprüche, **dadurch gekennzeichnet, dass** diese an einer oder beiden Schmalseiten (6) eines Paneels vorgesehen sind und weitere Kupplungselemente, vorzugsweise an den Längsseiten (7) der Paneele (1, 2), derart vorgesehen sind, dass diese an der Langseite ausschließlich durch eine Horizontalbewegung aufeinander zu verbunden werden können.

31. Paneele nach einem der vorhergehenden Ansprüche, **dadurch gekennzeichnet, dass** diese an einer oder beiden Schmalseiten (6) eines Paneels vorgesehen sind und weitere Kupplungselemente, vorzugsweise an den Längsseiten (7) der Paneele (1, 2), derart vorgesehen sind, diese durch ein Verschieben in einer Ebene und/ oder durch ein senkrechtes Absenken eines Paneels (2) relativ zur Oberfläche eines zweiten Paneel (1) verbunden werden können,

32. Paneele nach einem der vorherigen Ansprüche, **dadurch gekennzeichnet, dass** diese rechteckig oder quadratisch sind und / oder 6 bis 15 mm dick und/ oder 100 bis 2000 mm lang und/ oder 100 bis 2000 mm breit sind.

33. Belag, insbesondere Fußbodenbelag, gebildet aus Paneelen nach einem der vorgehenden Ansprüche.
